# EUROPEAN PATENT APPLICATION

(11) **EP 4 503 170 A1**
(43) Date of publication of application: **05.02.2025**
(21) Application number: 23779575.2
(22) Date of filing: 14.03.2023
(51) Int. Cl.: H01M 4/131, H01M 4/36, H01M 4/505, H01M 4/525, H01M 10/052, H01M 10/0587, H01M 50/107, H01M 50/131, H01M 50/152, H01M 50/533, H01M 50/536

(54) **CYLINDRICAL SECONDARY BATTERY**

(30) Priority: 30.03.2022 JP 2022055054
(71) Applicant: Panasonic Intellectual Property Management Co., Ltd., Osaka-shi, Osaka 540-6207 (JP)
(72) Inventor: KAWAKITA, Akihiro, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2023/009903
(87) International publication number: WO 2023/189557

(57) **Abstract**

This cylindrical secondary battery comprises: an electrode body in which a strip-shaped positive electrode and a strip-shaped negative electrode are wound with a separator interposed therebetween; a bottomed cylindrical exterior body, having an outer diameter of 25 mm or more, housing the electrode body and being connected to the negative electrode; and a sealing body sealing an opening at the upper end of the exterior body and being connected to the positive electrode. The positive electrode includes a positive-electrode current collector, and a positive-electrode mixture layer formed on the surface of the positive-electrode current collector, the positive-electrode mixture layer containing a positive-electrode active material and a sulfonic acid compound represented by general formula (I). The positive-electrode active material includes a lithium-containing composite oxide having a layered rock-salt structure. The weight per unit area of the positive-electrode mixture layer is 250 g/m² or more. In the electrode body, three or more positive-electrode leads are led out. 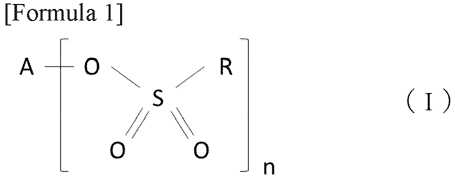 (In the formula, A is a group 1 element or a group 2 element, R is a hydrocarbon group, and n is 1 or 2.)

## Description

### TECHNICAL FILED

The present disclosure relates to a cylindrical secondary battery.

### BACKGROUND ART

In recent years, non-aqueous electrolyte secondary batteries that comprise a positive electrode, a negative electrode, and a non-aqueous electrolyte, and that move Li ions and the like between the positive electrode and the negative electrode to perform charge and discharge have been commonly used as secondary batteries with high output and high capacity. Patent Literature 1 discloses a cylindrical secondary battery that attempts to improve output characteristics of the battery and that reduces a cost of current collecting members by providing the current collecting members on upper and lower sides of an electrode assembly having a plurality of protruded tabs. Patent Literature 2 discloses a positive electrode active material in which a lithium sulfonate salt compound adheres to a surface of lithium titanate, and describes that this positive electrode active material has excellent high-temperature storage characteristics.

### CITATION LIST

### PATENT LITERATURE

PATENT LITERATURE 1: Japanese Patent No. 5747082
PATENT LITERATURE 2: Japanese Unexamined Patent Application Publication No. 2018-6164

### SUMMARY

In recent years, increase in size of a battery has been investigated for a purpose of increasing a battery capacity per unit volume. The present inventors have made intensive investigation, and consequently found that a large battery fails to improve output characteristics with increasing the battery capacity per unit volume even when the art described in Patent Literature 1 and Patent Literature 2 is combined. The art described in Patent Literature 1 and Patent Literature 2 does not consider the increase in size of the battery, and still has a room for improvement.

It is an advantage of the present disclosure to provide a cylindrical secondary battery having an improved battery capacity per unit volume and improved output characteristics.

A cylindrical secondary battery of an aspect of the present disclosure comprises: an electrode assembly in which a band-shaped positive electrode and a band-shaped negative electrode are wound with a separator interposed therebetween; a bottomed cylindrical exterior with greater than or equal to 25 mm in outer diameter that houses the electrode assembly and that is connected to the negative electrode; and a sealing assembly that seals an opening of an upper end of the exterior and that is connected to the positive electrode, wherein the positive electrode has a positive electrode current collector and a positive electrode mixture layer formed on a surface of the positive electrode current collector, the positive electrode mixture layer contains a positive electrode active material, the positive electrode active material includes a lithium-containing composite oxide having a layered rock-salt structure and a sulfonate compound present on a surface of the lithium-containing composite oxide, the sulfonate compound is represented by the following general formula (I), a basis weight of the positive electrode mixture layer is greater than or equal to 250 g/m², and in the electrode assembly, greater than or equal to three positive electrode leads are drawn out, 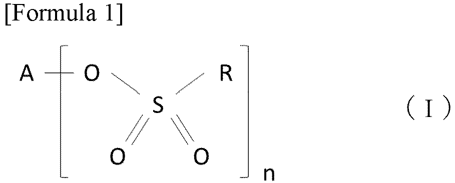 wherein A represents a I-group element or a II-group element, R represents a hydrocarbon group, and "n" represents 1 or 2.

A cylindrical secondary battery of another aspect of the present disclosure comprises: an electrode assembly in which a band-shaped positive electrode and a band-shaped negative electrode are wound with a separator interposed therebetween; a bottomed cylindrical exterior with greater than or equal to 25 mm in outer diameter that houses the electrode assembly and that is connected to the negative electrode; and a sealing assembly that seals an opening of an upper end of the exterior and that is connected to the positive electrode, wherein the positive electrode has a positive electrode current collector and a positive electrode mixture layer formed on a surface of the positive electrode current collector, the positive electrode mixture layer contains a positive electrode active material, the positive electrode active material includes a lithium-containing composite oxide having a layered rock-salt structure and a sulfonate compound present on a surface of the lithium-containing composite oxide, the sulfonate compound is represented by the following general formula (I), a basis weight of the positive electrode mixture layer is greater than or equal to 250 g/m², and in the electrode assembly, the positive electrode protruding above the negative electrode and the separator is connected to a positive electrode current-collecting member, and the positive electrode current-collecting member and the sealing assembly are connected with a positive electrode lead.

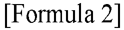

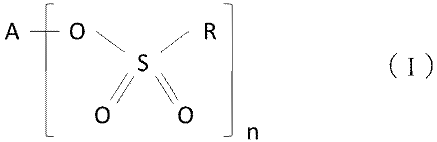

In the formula, A represents a I-group element or a II-group element, R represents a hydrocarbon group, and "n" represents 1 or 2.

According to the cylindrical secondary battery of an aspect of the present disclosure, both of the increase in the capacity per unit volume and the improvement of the output characteristics may be achieved.

### BRIEF DESCRIPTION OF DRAWINGS

FIG. 1 is a vertical cross-sectional view of a cylindrical secondary battery of an example of an embodiment.
FIG. 2 is a front view of a positive electrode and a negative electrode that constitute an electrode assembly comprised in the cylindrical secondary battery in FIG. 1 in a developed state.
FIGS. 3(a) and 3(b) are plane views illustrating a position where positive electrode leads are arranged in an upper surface of an electrode assembly. FIG. 3(a) illustrates an example of arrangement in substantially one line in a radial direction, and FIG. 3(b) illustrates an example of arrangement with substantially same angles.
FIG. 4 is a vertical cross-sectional view of a cylindrical secondary battery of another example of an embodiment.
FIG. 5 is a perspective view of an electrode assembly comprised in the cylindrical secondary battery in FIG. 3, and is a view illustrating constitution of a positive electrode, negative electrode, and separator in a state where a proximity of an outside end of winding is developed.

### DESCRIPTION OF EMBODIMENTS

In recent years, increase in size of a battery has been investigated for a purpose of increasing a battery capacity per unit volume. The battery with an increased size, however, tends to lack an electrolyte liquid at the winding center of an electrode assembly compared with conventional batteries, and thereby tends to deteriorate output characteristics. The present inventors have made intensive investigation to solve this problem, and found that the output characteristics are improved by using a positive electrode active material in which a sulfonate compound represented by the following general formula I adheres on a surface of a lithium-containing composite oxide. This is presumably because move of Li between the positive electrode active material and the electrolyte liquid is enhanced even with a small amount of the electrolyte liquid by an effect of the sulfonate compound. Thus, the increase in the capacity per unit volume of a secondary battery may be attempted by setting an outer diameter of the battery to greater than or equal to 25 mm, by setting a basis weight of the positive electrode mixture layer to greater than or equal to 250 g/m², and by setting connection between the positive electrode and a sealing assembly to a predetermined aspect, and the output characteristics of the secondary battery may be improved by using the above positive electrode active material.

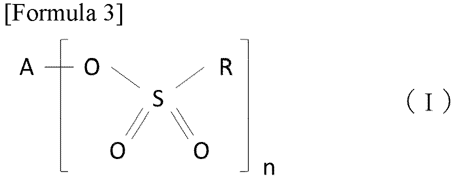

In the formula, A represents a I-group element or a II-group element, R represents a hydrocarbon group, and "n" represents 1 or 2.

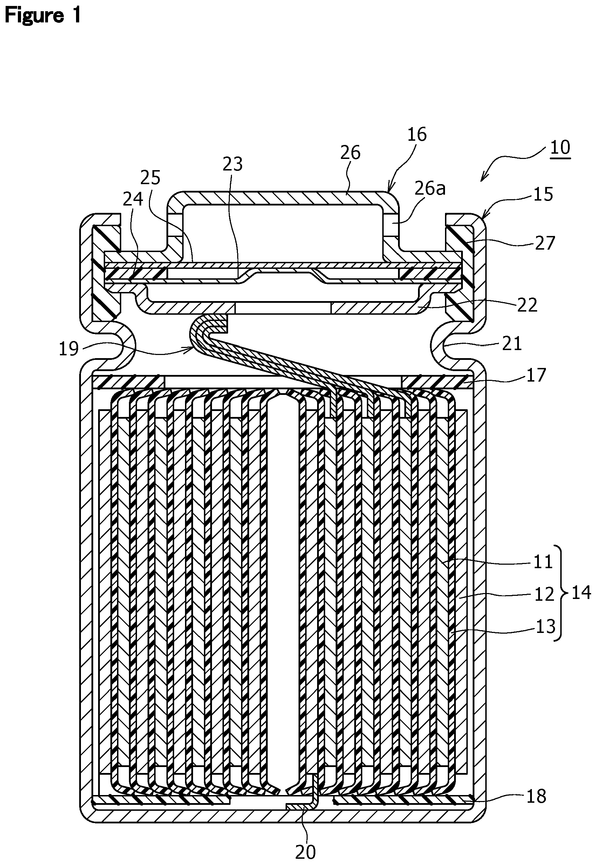

Hereinafter, an example of an embodiment of the cylindrical secondary battery according to the present disclosure will be described in detail with reference to FIG. 1 to FIG. 3. In the following description, specific shapes, materials, values, directions, and the like, which are examples for facilitating understanding of the present invention, may be appropriately modified with specifications of cylindrical secondary batteries. When a plurality of embodiments and modified examples are included in the following description, use in appropriate combination of characteristic portions thereof are anticipated in advance. When the term "substantially" is used herein, the term is used as the same meaning as the term "approximately", and the requirement "substantially" is satisfied by being virtually same.

FIG. 1 is a vertical cross-sectional view of a cylindrical secondary battery 10 of an example of an embodiment. In the secondary battery 10 illustrated in FIG. 1, an electrode assembly 14 and an electrolyte liquid (not illustrated) are housed in an exterior 15. The electrode assembly 14 has a wound structure in which a band-shaped positive electrode 11 and a band-shaped negative electrode 12 are wound with a separator 13 interposed therebetween. As a non-aqueous solvent (organic solvent) of the electrolyte liquid, any of carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the electrolyte liquid, LiPF₆, LiBF₄, LiCF₃SO₃, or the like, or a mixture thereof may be used. An amount of the electrolyte salt to be dissolved in the non-aqueous solvent may be, for example, greater than or equal to 0.5 mol/L and less than or equal to 2.0 mol/L. Hereinafter, for convenience of description, the side of the sealing assembly 16 will be described as the "upper side", and the bottom side of the exterior 15 will be described as the "lower side".

The opening of the upper end of the exterior 15 is sealed with the sealing assembly 16 to seal an inside of the secondary battery 10. Insulating plates 17 and 18 are provided on the upper and lower sides of the electrode assembly 14, respectively. Positive electrode leads 19 vertically extend through a through hole of the insulating plate 17, and connects a filter 22, which is a bottom plate of the sealing assembly 16, and the positive electrode 11 included in the electrode assembly 14. According to this, the positive electrode 11 and the sealing assembly 16 are connected, and in the secondary battery 10, a cap 26, which is a top plate of the sealing assembly 16 electrically connected to the filter 22, becomes a positive electrode terminal. The positive electrode lead 19 is an aluminum lead, for example. Meanwhile, a negative electrode lead 20 extends through a through hole of the insulating plate 18 toward a bottom side of the exterior 15, and is welded with a bottom inner surface of the exterior 15. According to this, the negative electrode 12 and the exterior 15 are connected, and in the secondary battery 10, the exterior 15 becomes a negative electrode terminal. The negative electrode lead 20 is a nickel lead, for example.

In the electrode assembly 14, three positive electrode leads 19 are drawn out. A number of the positive electrode leads 19 drawn out from the electrode assembly 14 may be greater than or equal to three. According to this, connecting resistance between the positive electrode 11 and the sealing assembly 16 may be reduced, and thereby the output characteristics of the secondary battery 10 may be improved. Since a larger number of the positive electrode leads 19 more reduces the connecting resistance but more increases the cost of the secondary battery 10, the number of the positive electrode leads 19 is preferably greater than or equal to three and less than or equal to ten, more preferably greater than or equal to three and less than or equal to eight, and particularly preferably greater than or equal to three and less than or equal to six from the viewpoint of achievement of both of the effect of reducing the connecting resistance and the cost. The greater than or equal to three positive electrode leads 19 drawn out from the electrode assembly 14 may be directly connected to the sealing assembly 16, or may be connected to the sealing assembly 16 via a known current collecting member. A connection aspect between the negative electrode 12 and the exterior 15 are not particularly limited, and may be connected with a plurality of the negative electrode leads 20.

The exterior 15 has a bottomed cylindrical shape with greater than or equal to 25 mm in outer diameter. The outer diameter of the exterior 15 is preferably greater than or equal to 30 mm, and more preferably greater than or equal to 35 mm. The outer diameter of the exterior 15 may be greater than or equal to 38 mm, may be greater than or equal to 40 mm, may be greater than or equal to 45 mm, or may be greater than or equal to 50 mm. The outer diameter of the exterior 15 may be less than or equal to 60 mm, for example. This range may improve the battery capacity per unit volume of the secondary battery 10. A thickness of the exterior 15 is, for example, greater than or equal to 0.1 mm and less than or equal to 2 mm. An inner diameter of the exterior 15 is preferably greater than or equal to 24 mm, more preferably greater than or equal to 29 mm, and particularly preferably greater than or equal to 34 mm. The inner diameter of the exterior 15 may be greater than or equal to 37 mm, may be greater than or equal to 39 mm, may be greater than or equal to 44 mm, or may be greater than or equal to 49 mm. The exterior 15 is, for example, a metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the upper face thereof.

The sealing assembly 16 has the filter 22, a lower vent member 23, an insulating member 24, an upper vent member 25, and the cap 26, which are stacked in this order from the electrode assembly 14 side. Each member constituting the sealing assembly 16 has, for example, a disk shape or a ring shape, and the members except for the insulating member 24 are electrically connected to each other. The lower vent member 23 and the upper vent member 25 are connected to each other at each of the centers, and the insulating member 24 is interposed between the circumferences. If the internal pressure of the battery increases due to abnormal heat generation, for example, the lower vent member 23 breaks and thereby the upper vent member 25 expands toward the cap 26 side to be separated from the lower vent member 23, resulting in breakage of electrical connection between both the members. If the internal pressure further increases, the upper vent member 25 breaks, and gas is discharged through an opening 26a of the cap 26.

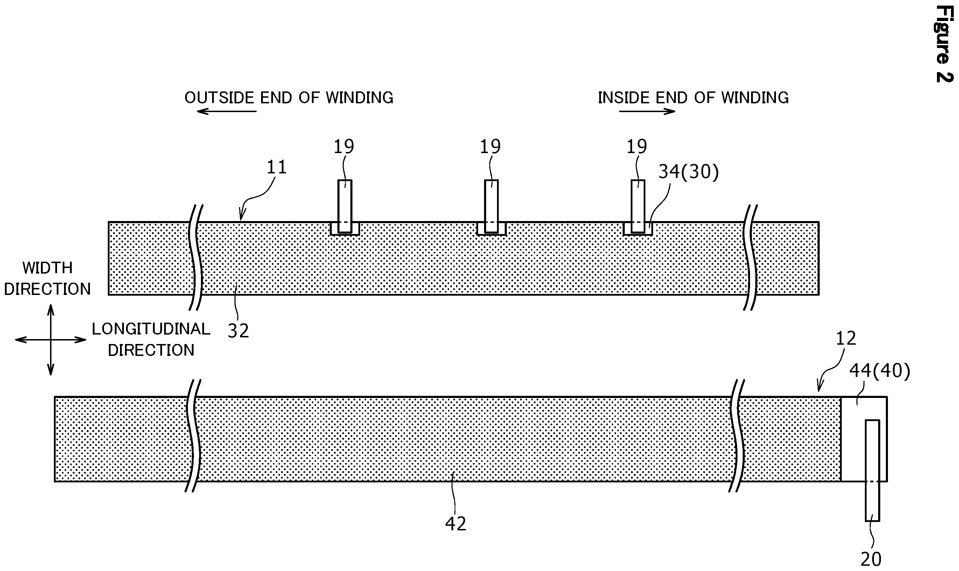

Next, the connection aspect between the positive electrode 11 and the positive electrode leads 19 will be described with reference to FIG. 2. FIG. 2 is a front view of the positive electrode 11 and the negative electrode 12 that constitute the electrode assembly 14 comprised in the secondary battery 10 in FIG. 1 in a developed state. The positive electrode 11 has a positive electrode current collector 30 and a positive electrode mixture layer 32 formed on a surface of the positive electrode current collector 30. The negative electrode 12 has a negative electrode current collector 40 and a negative electrode mixture layer 42 formed on a surface of the negative electrode current collector 40.

As illustrated in FIG. 2, the positive electrode 11 has a plurality of positive electrode current collector exposed portions 34 where the positive electrode current collector 30 is exposed on an upper end along a longitudinal direction, and the positive electrode mixture layer 32 is present between the positive electrode current collector exposed portions 34. One of the positive electrode leads 19 is connected to each of the positive electrode current collector exposed portions 34. The connection between the positive electrode lead 19 and the positive electrode 11 with such a form may increase an area of the positive electrode mixture layer 32, and thereby output characteristics of the secondary battery 10 may be improved. Meanwhile, the negative electrode 12 has a negative electrode current collector exposed portion 44 where a negative electrode current collector 40 is exposed on an inside end of winding in the longitudinal direction. A negative electrode lead 20 is connected to the negative electrode current collector exposed portion 44.

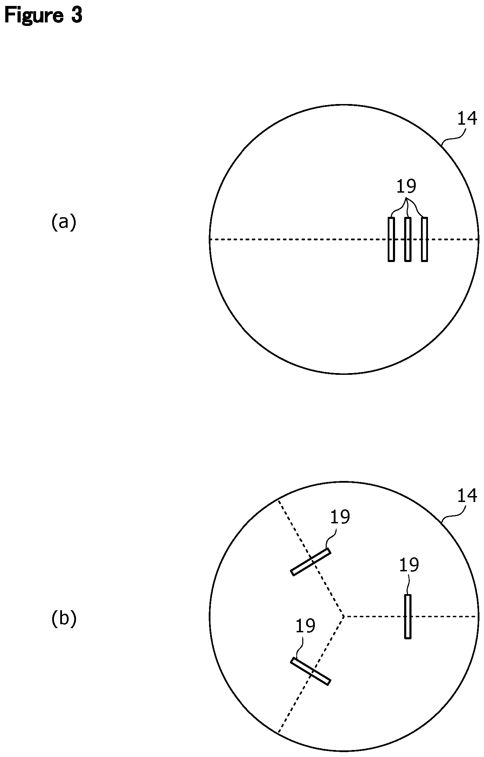

Next, arrangement of the positive electrode leads 19 will be described with reference to FIG. 3(a) and FIG. 3(b). FIG. 3(a) and FIG. 3(b) are both plane views illustrating a position where the positive electrode leads 19 are arranged in an upper surface of the electrode assembly 14.

The positive electrode leads 19 may be arranged in substantially one line in a radial direction, as illustrated in FIG. 3(a). This facilitates bundling of the positive electrode leads 19, and facilitates bonding of the positive electrode leads 19 to the filter 22. Although all the positive electrode leads 19 are disposed on one side relative to a center of the electrode assembly 14 in FIG. 3(a), the positive electrode leads 19 may be disposed on both sides relative to the center of the electrode assembly 14. The positive electrode leads 19 may be bonded to the filter 22 at a plurality of positions.

The positive electrode leads 19 may be arranged with substantially same angles as illustrated in FIG. 3(b). This facilitates bonding to the filter 22 without obstruction of each of the plurality of the positive electrode leads 19 by the other positive electrode leads 19.

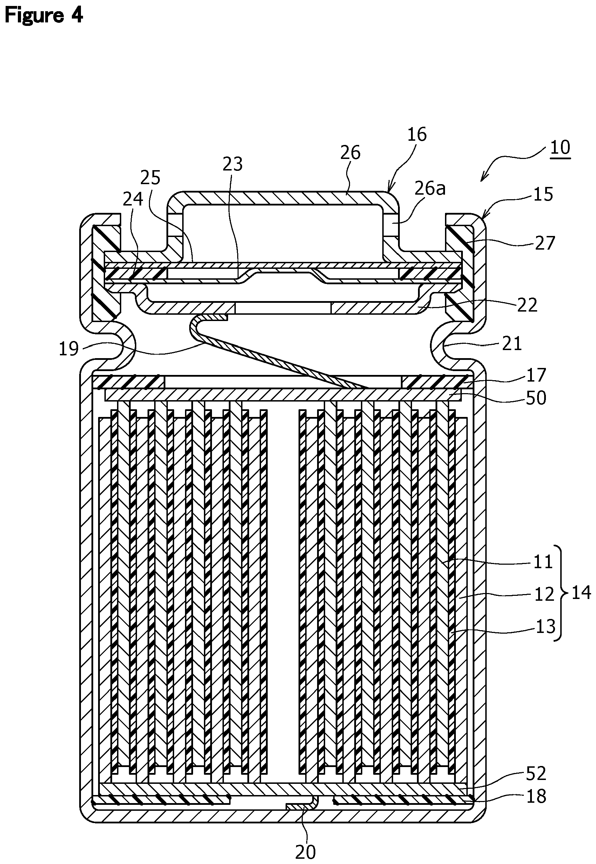

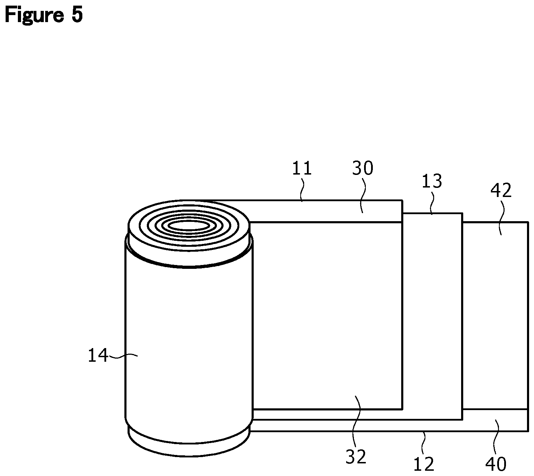

Hereinafter, another example of an embodiment of the cylindrical secondary battery according to the present disclosure will be described in detail with reference to FIG. 4 and FIG. 5. In the following embodiment, a same construction as in the embodiment illustrated in FIG. 1 is followed by a same sign as in the embodiment illustrated in FIG. 1 to omit the description. In the following embodiment, description about effects and modified examples same as in the embodiment illustrated in FIG. 1 will be omitted.

FIG. 4 is a view of the other example of the embodiment, which corresponds to FIG. 1. As illustrated in FIG. 4, the positive electrode 11 included in the electrode assembly 14 is connected to a positive electrode current collecting member 50, and the positive electrode current collecting member 50 and the sealing assembly 16 are connected with the positive electrode lead 19. This makes connection between the positive electrode 11 and the sealing assembly 16, and in the secondary battery 10, the cap 26, which is the top plate of the sealing assembly 16 electrically connected to the filter 22, becomes the positive electrode terminal. The negative electrode 12 included in the electrode assembly 14 is connected to a negative electrode current collecting member 52, and the negative electrode current collecting member 52 and the exterior 15 are connected with the negative electrode lead 20. This makes connection between the negative electrode 12 and the exterior 15, and in the secondary battery 10, the exterior 15 becomes the negative electrode terminal. The connection aspect between the negative electrode 12 and the exterior 15 is not particularly limited, and may be connected with the negative electrode lead 20, similarly to the embodiment illustrated in FIG. 1, for example.

A material, shape, and the like of the positive electrode current collecting member 50 are not particularly limited as long as it is connectable to the positive electrode 11 and the sealing assembly 16. For example, the positive electrode current collecting member 50 may be a disk-shaped member made of aluminum. The positive electrode current collecting member 50 may have a hole or a plurality of holes at any position from the viewpoints of circulation of the electrolyte liquid, and the like. A material, shape, and the like of the negative electrode current collecting member 52 are not particularly limited as long as it is connectable to the negative electrode 12 and the exterior 15. For example, the negative electrode current collecting member 52 may be a disk-shaped member made of nickel. The negative electrode current collecting member 52 may have a hole or a plurality of holes at any position from the viewpoints of circulation of the electrolyte liquid, and the like.

Next, constitution of the electrode assembly 14 will be described with reference to FIG. 5. FIG. 5 is a perspective view of the electrode assembly 14 of the secondary battery 10 illustrated in FIG. 4, and is a view illustrating constitution of the positive electrode 11, negative electrode 12, and separator 13 in a state where a proximity of an outside end of winding is developed. In the electrode assembly 14, the positive electrode 11 protrudes above the negative electrode 12 and the separator 13. This connects the positive electrode 11 to the positive electrode current collecting member 50. As illustrated in FIG. 5, the positive electrode 11 may have the positive electrode current collector exposed portion 34 where the positive electrode current collector 30 is exposed on the upper end. This may more certainly make the connection between the positive electrode 11 and the positive electrode current collecting member 50. Meanwhile, the negative electrode 12 protrudes below the positive electrode 11 and the separator 13. This connects the negative electrode 12 to the negative electrode current collecting member 52. As illustrated in FIG. 5, the negative electrode 12 may have the negative electrode current collector exposed portion 44 where negative electrode current collector 40 is exposed on the lower end. This may more certainly make the connection between the negative electrode 12 and the negative electrode current collecting member 52.

Hereinafter, the positive electrode 11, negative electrode 12, and separator 13, which constitute the electrode assembly 14, particularly the positive electrode 11, will be described in detail. The positive electrode 11, the negative electrode 12, and the separator 13, described hereinafter, are applicable for any of the aforementioned embodiments.

### [Positive Electrode]

The positive electrode 11 has the positive electrode current collector 30 and the positive electrode mixture layer 32 formed on the surface of the positive electrode current collector 30. The positive electrode mixture layer 32 is preferably formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used.

The positive electrode mixture layer 32 contains a positive electrode active material. The positive electrode mixture layer 32 may further contain a conductive agent, a binder, and the like. The positive electrode mixture layer 32 may be produced by, for example, applying a positive electrode slurry including the positive electrode active material, the conductive agent, the binder, and the like on a surface of the positive electrode current collector 30, and drying and subsequently compressing the coating.

Examples of the conductive agent included in the positive electrode mixture layer 32 include carbon-based materials such as carbon black (CB), acetylene black (AB), Ketjenblack, carbon nanotube (CNT), graphene, and graphite. These materials may be used singly, or may be used in combination of two or more. A content of the conductive agent in the positive electrode mixture layer 32 is preferably greater than or equal to 0.01 mass% and less than or equal to 5 mass%, and more preferably greater than or equal to 0.05 mass% and less than or equal to 3 mass% relative to the total mass of the positive electrode mixture layer 31.

Examples of the binder included in the positive electrode mixture layer 32 include fluororesins such as polytetrafluoroethylene (PTFE) and polyvinylidene fluoride (PVDF), a polyimide resin, an acrylic resin, a polyolefin resin, and polyacrylonitrile (PAN). These materials may be used singly, or may be used in combination of two or more. A content of the binder in the positive electrode mixture layer 32 is preferably greater than or equal to 0.1 mass% and less than or equal to 5 mass%, and more preferably greater than or equal to 0.5 mass% and less than or equal to 3 mass% relative to a total mass of the positive electrode mixture layer 32.

A basis weight of the positive electrode mixture layer 32 is greater than or equal to 250 g/m². According to this, a cost of the secondary battery 10 may be reduced. The basis weight of the positive electrode mixture layer 32 may be less than or equal to 400 g/m². A thickness of the positive electrode mixture layer 32 is, for example, greater than or equal to 10 µm and less than or equal to 150 µm on one side of the positive electrode current collector 30.

The positive electrode active material included in the positive electrode mixture layer 32 includes a lithium-containing composite oxide having a layered rock-salt structure and a sulfonate compound present on a surface of the lithium-containing composite oxide. The lithium-containing composite oxide includes, for example, secondary particles formed by aggregation of primary particles. Here, the surface of the lithium-containing composite oxide means surfaces of the secondary particles of the lithium-containing composite oxide or an interface on which the primary particles are contacted with each other. That is, the sulfonate compound is present on the surfaces of the secondary particles of the lithium-containing composite oxide or on the interface on which the primary particles are contacted with each other.

A particle diameter of the primary particles constituting the secondary particles of the lithium-containing composite oxide is, for example, greater than or equal to 0.02 µm and less than or equal to 2 µm. The particle diameter of the primary particle is measured as a diameter of a circumscribed circle in a particle image observed with a scanning electron microscope (SEM). An average particle diameter of the secondary particles of the lithium-containing composite oxide is, for example, greater than or equal to 2 µm and less than or equal to 30 µm. The average particle diameter herein means a median diameter (D50) on a volumetric basis. The D50 means a particle diameter at which a cumulative frequency is 50% from a smaller particle diameter side in a particle size distribution on a volumetric basis. The particle size distribution of the secondary particles of the lithium-containing composite oxide may be measured by using a laser diffraction-type particle size distribution measuring device (for example, MT3000II, manufactured by MicrotracBEL Corp.) with water as a dispersion medium.

The lithium-containing composite oxide may be a mixture of: particles having D50 of greater than or equal to 10 µm; and particles having D50 of less than or equal to 6 µm. According to this, a filling density of the positive electrode active material may be increased in the positive electrode mixture layer 32, and thereby the battery capacity may be increased. The particles having D50 of greater than or equal to 10 µm and the particles having D50 of less than or equal to 6 µm are secondary particles, for example.

The layered rock-salt structure of the lithium-containing composite oxide belongs to, for example, the space group R-3m, the space group C2/m, or the like. In terms of increasing the capacity, stability of the crystal structure, and the like, the lithium-containing composite oxide preferably has a layered rock-salt structure belonging to the space group R-3m. The layered rock-salt structure of the lithium-containing composite oxide may include a transition metal layer, a Li layer, and an oxygen layer. By the Li layer reversibly intercalating and deintercalating Li ions present in the Li layer, charge-discharge reactions of a battery proceed.

The lithium-containing composite oxide contains Ni, for example, and a content rate of Ni in the lithium-containing composite oxide may be greater than or equal to 70 mol% and less than or equal to 95 mol% relative to a total number of moles of metal elements excluding Li. This yields a battery with a high capacity. The rate of Ni relative to the total number of moles of the metal elements excluding Li in the lithium-containing composite oxide is preferably greater than or equal to 80 mol%. This yields a battery with a higher capacity.

The lithium-containing composite oxide may be a composite oxide represented by the general formula LiₐNiₓCo_{y}Al_{z}Mn_{w}M1ᵥO_{2-b}, wherein 0.95 ≤ a ≤ 1.05, 0.7 ≤ x ≤ 0.95, 0 ≤ y ≤ 0.15, 0 ≤ z ≤ 0.1, 0 ≤ w ≤ 0.3, 0 ≤ v ≤ 0.1,0 ≤ b ≤ 0.05, x+y+z+w+v=1, and M1 includes at least one element selected from the group consisting of Fe, Ti, Si, Nb, Zr, Mo, W, and Zn. The positive electrode active material may include a lithium-containing composite oxide other than that represented by the above general formula or another compound within a range not impairing the object of the present disclosure. The mole fractions of the metal elements contained in entire particles of the lithium-containing composite oxide are measured by inductively coupled plasma (ICP) atomic emission spectrometry.

The sulfonate compound present on the surface of the lithium-containing composite oxide is represented by the following general formula I, 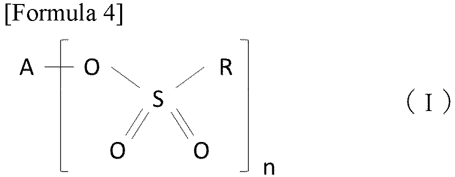 wherein A represents a I-group element or a II-group element, R represents a hydrocarbon group, and "n" represents 1 or 2.

In the general formula I, A preferably represents a I-group element, and more preferably represents Li. According to this, initial charge-discharge efficiency may be more increased. When A represents the I-group element, n=1.

In the general formula I, R preferably represents an alkyl group. R more preferably represents an alkyl group having less than or equal to 5 carbon atoms, further preferably represents an alkyl group having less than or equal to 3 carbon atoms, and particularly preferably represents a methyl group. In R, a part of hydrogen bonded to carbon may be substituted with fluorine. Note that not all the hydrogen bonded to carbon in R is substituted with fluorine. R having a small molecular weight may reduce reaction resistance.

Examples of the sulfonate compound may include lithium methanesulfonate, lithium ethanesulfonate, lithium propanesulfonate, sodium methanesulfonate, magnesium methanesulfonate, and lithium fluoromethanesulfonate.

An amount of the sulfonate compound present on the surface of the lithium-containing composite oxide is preferably greater than or equal to 0.1 mass% and less than or equal to 1 mass%, and more preferably greater than or equal to 0.3 mass% and less than or equal to 0.8 mass% relative to the mass of the lithium-containing composite oxide.

The presence of the sulfonate compound on the surface of the lithium-containing composite oxide may be confirmed by Fourier transform infrared spectrometry (FT-IR). In an infrared absorption spectrum obtained by FT-IR, the positive electrode active material may have an absorption peak at at least greater than or equal to one of positions near 1238 cm⁻¹, 1175 cm⁻¹, 1065 cm⁻¹, and 785 cm⁻¹.

In the infrared absorption spectrum obtained by FT-IR, for example, the positive electrode active material including lithium methanesulfonate has absorption peaks near 1238 cm⁻¹, 1175 cm⁻¹, 1065 cm⁻¹, and 785 cm⁻¹. The peaks near 1238 cm⁻¹, 1175 cm⁻¹, and 1065 cm⁻¹ are absorption peaks attributed to an SO stretching vibration derived from lithium methanesulfonate. The peak near 785 cm⁻¹ is an absorption peak attributed to a CS stretching vibration derived from lithium methanesulfonate.

In the positive electrode active material including a sulfonate compound other than lithium methanesulfonate, the absorption peak derived from the sulfonate compound included in the positive electrode active material may be identified similarly to the positive electrode active material including lithium methanesulfonate. The presence of the sulfonate compound on the surface of the lithium-containing composite oxide may also be confirmed by ICP, atomic absorption, X-ray photoelectron spectroscopy (XPS), radiation XRD measurement, TOF-SIMS, and the like.

An average particle diameter of the sulfonate compound is preferably less than or equal to 10 µm, more preferably less than or equal to 5 µm, and further preferably less than or equal to 3 µm. By setting the average particle diameter of the sulfonate compound to preferably less than or equal to 10 µm, more preferably less than or equal to 5 µm, and further preferably less than or equal to 3 µm, the sulfonate compound may adhere to an entirety of the positive electrode active material powder more uniformly, and the effect by the sulfonate compound may be exhibited more remarkably. A lower limit of the average particle diameter of the sulfonate compound is, for example, 0.1 µm. Here, the average particle diameter of the sulfonate compound may be determined by observing the sulfonate compound adhering to the surface of the lithium-containing composite oxide with an SEM. Specifically, outer shapes of randomly selected 50 particles are specified, and a major diameter (the longest diameter) of each of the 50 particles is determined to specify an average value thereof as the average particle diameter of the sulfonate compound.

On the surface of the lithium-containing composite oxide, a metal compound may be present. The metal compound includes, for example, one or more metal elements selected from the group consisting of Sr, Ca, W, Zr, rare-earth elements, and Al. Examples of the compound containing Sr may include SrO, Sr(OH)₂, and SrCO₃. Examples of the compound containing Ca may include CaO, Ca(OH)₂, and CaCO₃. Examples of the compound containing W may include WO₃. Examples of the compound containing Al may include Al₂O₃. Examples of the compound containing Zr may include ZrO₂, Zr(OH)₄, Zr(CO₃)₂, and Zr(SO₄)₂·4H₂O. Examples of the compound containing the rare-earth element may include an oxide, a hydroxide, a carbonate salt, a sulfate salt, a nitrate salt, and a phosphate salt of the rare-earth elements. The metal compound may contain a plurality of types of these metal elements, and examples thereof may include SrAlO₄ and CaAlO₄. The metal compound may further contain Li, and examples thereof may include lithium tungstate.

On the surface of the lithium-containing composite oxide, a nonmetallic compound may be present. The nonmetallic compound includes, for example, one or more nonmetallic elements selected from the group consisting of P and B. Examples of the compound containing P may include Li₃₋ₓHₓPO₄ (0≤x≤3). Examples of the compound containing B may include H₃BO₃, Li₃BO₃, and Li₂B₄O₇.

As for the positive electrode active material, when a filtrate of a water dispersion in which 1 g of the positive electrode active material is dispersed in 70 ml of pure water is titrated with hydrochloric acid, a value of Y-X is preferably less than or equal to 130 µmol/g, more preferably less than or equal to 100 µmol/g, and further preferably less than or equal to 60 µmol/g, wherein an amount of the consumed acid until a first inflection point on the pH curve is represented by X mol/g, and an amount of the consumed acid until a second inflection point is represented by Y mol/g. A value of X-(Y-X) is preferably less than or equal to 130 µmol/g, more preferably less than or equal to 100 µmol/g, and further preferably less than or equal to 60 µmol/g. That is, the positive electrode active material may include a slight amount of a water-soluble alkaline component titrated with an acid. When the amount of the alkaline component included in the positive electrode active material is small, stability of the slurry is improved, leading to improved productivity.

The positive electrode active material includes the alkaline component only at an amount corresponding to the aforementioned amount of the consumed acid. Examples of the alkaline component include lithium hydroxide (LiOH) and lithium carbonate (Li₂CO₃). Inside the particles of the composite oxide, lithium carbonate and lithium hydroxide may be present on the interfaces of the primary particles and on the surfaces of the secondary particles each formed by aggregation of the primary particles. These are preferably uniformly present without uneven presence on a part of the surfaces of the primary particles.

A specific quantification method of the water-soluble alkaline component extracted from the positive electrode active material is as follows. The following titration method is commonly called "Warder method".
(1) To 30 ml of pure water, 1 g of the positive electrode active material is added, and the mixture is stirred to prepare a suspension in which the active material is dispersed in water.
(2) The suspension is filtered and filled up to 70 ml by adding pure water to obtain a filtrate including the water-soluble alkaline component eluted from the active material.
(3) To the filtrate, hydrochloric acid is gradually added dropwise while measuring a pH of the filtrate to determine the amount of hydrochloric acid (titration amount) X mol/g consumed until the first inflection point (near pH 8) on the pH curve and the amount of hydrochloric acid Y mol/g consumed until the second inflection point (near pH 4). The inflection point is a peak position of a differential value relative to the titration amount.

The positive electrode mixture layer 31 may include another positive electrode active material in addition to the positive electrode active material of the aforementioned present embodiment. Examples of the other positive electrode active material include a lithium-containing composite oxide in which the sulfonate compound is absent on the surface.

Next, an example of a method for manufacturing the positive electrode active material according to the present embodiment will be described. The method for manufacturing the positive electrode active material includes, for example, a synthesizing step, a washing step, a drying step, and an adding step.

In the synthesizing step, for example, a metal oxide containing greater than or equal to 70 mol% and less than or equal to 95 mol% of Ni, greater than or equal to 0 mol% and less than or equal to 15 mol% of Co, greater than or equal to 0 mol% and less than or equal to 10 mol% of Al, greater than or equal to 0 mol% and less than or equal to 30 mol% of Mn, and greater than or equal to 0 mol% and less than or equal to 10 mol% of M1 (M1 includes at least one element selected from the group consisting of Fe, Ti, Si, Nb, Zr, Mo, W, and Zn); and a Li compound are mixed and calcined to obtain a lithium-containing composite oxide.

The metal oxide may be obtained by, for example, with stirring a solution of metal salts including Ni and optional metal elements (such as Co, Al, Mn, and Fe), adding dropwise a solution of an alkali such as sodium hydroxide in order to adjust a pH on the alkaline side (for example, greater than or equal to 8.5 and less than or equal to 12.5) to precipitate (coprecipitate) a composite hydroxide including Ni and the optional metal elements, and subjecting the composite hydroxide to a thermal treatment. The thermal treatment temperature is not particularly limited, but within a range of greater than or equal to 300°C and less than or equal to 600°C, for example.

Examples of the Li compound include Li₂CO₃, LiOH, Li₂O₂, Li₂O, LiNO₃, LiNO₂, Li₂SO₄, LiOH·H₂O, LiH, and LiF. A mixing ratio between the metal oxide and the Li compound is preferably set so that the mole ratio of the metal elements excluding Li : Li is within a range of, for example, greater than or equal to 1:0.98 and less than or equal to 1: 1.1 in terms of easily regulating the above parameters within the specified ranges. When the metal oxide and the Li compound are mixed, another metal raw material may be added as necessary. The other metal raw material herein refers to an oxide or the like including a metal element other than the metal element constituting the metal oxide.

The mixture of the metal oxide and the Li compound is calcined under an oxygen atmosphere, for example. The calcining conditions may be conditions such that a heating rate within greater than or equal to 450°C and less than or equal to 680°C is within a range of greater than 1.0 °C/min and less than or equal to 5.5 °C/min, and a highest reaching temperature is within a range of greater than or equal to 700°C and less than or equal to 980°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. This calcining step may be a multi-step calcination, and a plurality of the first heating rates and the second heating rates may be set in each temperature range as long as the first heating rates and the second heating rates are within the above determined ranges.

In the washing step, the lithium-containing composite oxide obtained in the synthesizing step is washed with water, and dehydrated to obtain a cake-like composition. The washing with water and the dehydration may be performed by a known method under a known condition, and performed within a range so as not to deteriorate the battery characteristics due to elution of lithium from the lithium-containing composite oxide. Note that the positive electrode active material according to the present embodiment is washed with water, and thereby an amount of the remained alkali component is small.

In the drying step, the cake-like composition obtained in the washing step is dried to obtain a powder composition. The drying step may be performed under a vacuum atmosphere. The drying conditions are, for example, greater than or equal to 150°C and less than or equal to 400°C for greater than or equal to 0.5 hours and less than or equal to 15 hours.

In the adding step, at least one of the sulfonate compound and the sulfonic acid solution is added to the cake-like composition obtained in the washing step or to the powder composition obtained in the drying step. This may adhere the sulfonate compound to the surface of the lithium-containing composite oxide. The at least one of the sulfonate compound and the sulfonic acid solution is preferably added to the cake-like composition. The Li compound remains in the cake-like composition, and this remained Li compound is dissolved in water contained in the cake-like composition. Thus, also when the sulfonic acid solution is added, the sulfonate compound including Li is formed. The amount of the sulfonate compound or sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing composite oxide. A concentration of the sulfonic acid solution is, for example, greater than or equal to 0.5 mass% and less than or equal to 40 mass%.

As for the metal compound including one or more metal elements selected from the group consisting of Sr, Ca, W, Zr, rare-earth elements, and Al, and the nonmetallic compound including one or more nonmetallic elements selected from the group consisting of P and B, raw materials for the metal compound and the nonmetallic compound may be added any of, for example, in the synthesizing step, after the synthesizing step, in the washing step, after the washing step, in the drying step, after the drying step, or in the adding step to adhere to the surface of the lithium-containing composite oxide. Examples of the Sr raw material include Sr(OH)₂, Sr(OH)₂·8H₂O, SrO, SrCo₃, SrSO₄, Sr(NO₃)₂, SrCl₂, and SrAlO₄. Examples of the Ca raw material include Ca(OH)₂, CaO, CaCO₃, CaSO₄, Ca(NO₃)₂, CaCl₂, and CaAlO₄. Examples of the Zr raw material include Zr(OH)₄, ZrO₂, Zr(CO₃)₂, and Zr(SO₄)₂·4H₂O. Examples of the rare-earth element raw material include an oxide, a hydroxide, and a carbonate salt of the rare-earth element. Examples of the W raw material may include tungsten oxide (WO₃) and lithium tungstate (Li₂WO₄, Li₄WO₅, and Li₆W₂O₉). As the W raw material, a solution containing W may also be used. Although Al₂O₃, Al(OH)₃, Al₂(SO₄)₃, or the like may be used as the Al raw material, Al may be derived from the lithium-containing composite oxide. Examples of the P raw material include Li₃₋ₓHₓPO₄ (0≤x≤3). Examples of the B raw material include H₃BO₃, Li₃BO₃, and Li₂B₄O₇.

The positive electrode mixture layer 32 may further contain Li₂NiO₂. Li₂NiO₂ contains much Li, and functions as a Li-supplying agent to supply Li ions to the negative electrode 12 during an initial charge. Li₂NiO₂ may have structure identified with the space group Immm.

A mass of Li₂NiO₂ included in the positive electrode mixture layer 32 may be greater than or equal to 1 part by mass and less than or equal to 10 parts by mass relative to 100 parts by mass of the positive electrode active material included in the positive electrode mixture layer 32. The mass of Li₂NiO₂ included in the positive electrode mixture layer 32 of greater than or equal to 1 part by mass may supply a sufficient amount of Li ions to the negative electrode. As described later, at least a part of Li₂NiO₂ changes to a compound represented by the general formula LiₐNi₂₋ₐO₂ (0 < a ≤ 0.5). If the mass of Li₂NiO₂ included in the positive electrode mixture layer 32 is greater than 10 parts by mass, the battery capacity decreases because the compound represented by the general formula LiₐNi₂₋ₐO₂ (0 < a ≤ 0.5) less contributes to the charge-discharge capacity than the lithium-containing composite oxide.

A part or all of Li₂NiO₂ after initial charge and discharge changes to the compound represented by the general formula LiₐNi₂₋ₐO₂ (0 < a ≤ 0.5), for example. That is, the positive electrode mixture layer 32 may further contain the compound represented by the general formula LiₐNi₂₋ₐO₂ (0 < a ≤ 0.5). The compound represented by LiₐNi₂₋ₐO₂ (0 < a ≤ 0.5) releases and occludes Li ions in charge and discharge to function as the positive electrode active material.

A mass of the compound represented by LiₐNi₂₋ₐO₂ (0 < a ≤ 0.5) included in the positive electrode mixture layer 32 may be greater than or equal to 0.1 part by mass and less than or equal to 5 parts by mass relative to 100 parts by mass of the positive electrode active material included in the positive electrode mixture layer 32. When the mass of the compound represented by the general formula LiₐNi₂₋ₐO₂ (0 < a ≤ 0.5) included in the positive electrode mixture layer 32 is greater than or equal to 0.1 part by mass, a sufficient amount of Li ions may be supplied to the negative electrode. If the mass of the compound represented by the general formula LiₐNi₂₋ₐO₂ (0 < a ≤ 0.5) included in the positive electrode mixture layer 32 is greater than 5 parts by mass, the battery capacity decreases because the compound represented by the general formula LiₐNi₂₋ₐO₂ (0 < a ≤ 0.5) less contributes to the charge-discharge capacity than the lithium-containing composite oxide.

### [Negative Electrode]

The negative electrode 12 has the negative electrode current collector 40 and the negative electrode mixture layer 42 formed on the surface of the negative electrode current collector 40. The negative electrode mixture layer 42 is preferably formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 42 may include a negative electrode active material, a binder, and the like. The negative electrode 12 may be produced by, for example, applying a negative electrode slurry including the negative electrode active material, the binder, and the like on the surface of the negative electrode current collector 40, and drying and subsequently compressing the coating to form the negative electrode mixture layers 42 on both the surfaces of the negative electrode current collector 40.

The negative electrode active material included in the negative electrode mixture layer 42 is not particularly limited as long as it may reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by SiOₓ (0.5 ≤ x ≤ 1.6), a Si-containing compound in which Si fine particles are dispersed in a lithium silicate phase represented by Li_{2y}SiO_{(2+y)} (0 < y < 2), or the like may be used in combination with the graphite.

For the binder included in the negative electrode mixture layer 42, a fluororesin, a polyimide resin, an acrylic resin, a polyolefin resin, PAN, and the like may be used as in the case of the positive electrode 11, but styrene-butadiene rubber (SBR) is preferably used. The negative electrode mixture layer 42 may include CMC or a salt thereof, polyacrylic acid (PAA) or a salt thereof, polyvinyl alcohol (PVA), and the like.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene and polypropylene, cellulose, and the like are suitable. The separator 13 may have a single-layered structure, or may have a stacked structure. On a surface of the separator 13, a resin layer having high heat resistance, such as an aramid resin, and a filler layer including a filler of an inorganic compound may be provided.

### EXAMPLES

Hereinafter, the present disclosure will be further described with Examples and Comparative Examples, but the present disclosure is not limited to the following Examples.

### [Production of Positive Electrode Active Material]

### <Example 1>

A composite hydroxide obtained by a coprecipitation method and represented by [Ni_{0.90}Co_{0.05}Al_{0.05}](OH)₂ was calcined at 500°C for 8 hours to obtain a composite oxide (Ni_{0.90}Co_{0.05}Al_{0.05}O₂). Then, LiOH and the composite oxide were mixed so that a mole ratio between Li, and a total amount of Ni, Co, and Al was 1.03: 1 to obtain a mixture. This mixture was calcined under an oxygen flow (at a flow rate of 2 mL/min per 10 cm³ and 5 L/min per kilogram of the mixture) at an oxygen concentration of 95% from room temperature to 650°C at a heating rate of 2.0°C/min, and then calcined from 650°C to 780°C at a heating rate of 0.5°C/min to obtain a lithium-containing composite oxide (the synthesizing step). To this lithium-containing composite oxide, water was added so that a slurry concentration was 1500 g/L, the mixture was stirred for 15 minutes, and filtered to obtain a cake-like composition (the washing step). To this cake-like composition, lithium methanesulfonate powder was added (the adding step). An amount of the lithium methanesulfonate added was 0.1 mass% relative to a total mass of the lithium-containing composite oxide. After the adding step, a drying step was performed under conditions of a vacuum atmosphere at 180°C for 2 hours to obtain a positive electrode active material of Example 1. By Fourier transformation infrared spectrometry (FT-IR), the presence of lithium sulfonate on the surface of the positive electrode active material was confirmed. In the positive electrode active material, a value of Y-X was 52 µmol/g, and a value of X-(Y-X) was 43 µmol/g. An average particle diameter (D50) of the positive electrode active material (lithium-containing composite oxide) was 11 µm.

### [Production of Positive Electrode]

Mixing 92 parts by mass of the positive electrode active material, 5 parts by mass of acetylene black (AB), and 3 parts by mass of polyvinylidene fluoride (PVDF) was performed, and then this mixture and N-methyl-2-pyrrolidone (NMP) were mixed to prepare a positive electrode slurry. Then, this slurry was applied on a positive electrode current collector composed of aluminum foil with 15 µm in thickness so that a basis weight was 250 g/m², the coating was dried and subsequently rolled with a roller, and the rolled product was cut to a predetermined electrode size to be housed in an exterior with φ50 mm in outer diameter to obtain a positive electrode in which positive electrode mixture layers were formed on both surfaces of the positive electrode current collector. An exposed portion where a surface of the positive electrode current collector was exposed was provided on an upper end of the positive electrode.

### [Production of Negative Electrode]

As a negative electrode active material, natural graphite was used. The negative electrode active material, sodium carboxymethylcellulose (CMC-Na), and styrene-butadiene rubber (SBR) were mixed at a solid-content mass ratio of 100:1:1 in an aqueous solution to prepare a negative electrode slurry. This negative electrode slurry was applied on both surfaces of a negative electrode current collector composed of copper foil, the coating was dried and subsequently rolled by using a roller, and the rolled product was cut to the predetermined electrode size to obtain a negative electrode in which negative electrode mixture layers were formed on both the surfaces of the negative electrode current collector. An exposed portion where a surface of the negative electrode current collector was exposed was provided on an inside end of winding of the negative electrode.

### [Preparation of Non-Aqueous Electrolyte]

Ethylene carbonate (EC), ethyl methyl carbonate (EMC), and dimethyl carbonate (DMC) were mixed at a volume ratio of 3:3:4. Into this mixed solvent, lithium hexafluorophosphate (LiPF₆) was dissolved so that the concentration was 1.2 mol/L to prepare a non-aqueous electrolyte.

### [Production of Test Cell]

As illustrated in FIG. 3(a), six aluminum leads were attached to the exposed portion of the positive electrode with the substantially same intervals so that three of the aluminum leads were each arranged in substantially one line in a radial direction of the electrode assembly across a center of an electrode assembly. One nickel lead was attached to the exposed portion of the negative electrode. The positive electrode and the negative electrode were spirally wound with a separator made of a polyolefin interposed therebetween to produce a wound electrode assembly. This electrode assembly was housed inside an exterior with 50 mm in outer diameter, the non-aqueous electrolyte was injected, and then an upper opening of the exterior was sealed with a sealing assembly to obtain a test cell.

### [Evaluation of Battery Capacity per Unit Volume]

Under a temperature environment at 25°C, the test cell was charged at a constant current of 0.1 C until a battery voltage reached 4.2 V, charged at a constant voltage of 4.2 V until a current value reached 0.01 C, and discharged at a constant current of 0.1 C until the battery voltage reached 2.5 V. Furthermore, under a temperature environment at 25°C, the test cell was charged at a constant current of 0.1 C until the battery voltage reached 4.2 V, charged at a constant voltage of 4.2 V until the current value reached 0.01 C, and then discharged at a constant current of 0.3 C until the battery voltage reached 2.5 V. A discharge capacity at this time was specified as an initial discharge capacity. The initial discharge capacity was divided by a volume of the test cell to calculate a battery capacity per unit volume. In the above charge and discharge, an interval for 10 minutes was provided when the charge was switched to the discharge.

### [Evaluation of Output Characteristics]

Under a temperature environment at 25°C, the test cell was charged at a constant current of 0.2 C until a battery voltage reached 4.2 V, charged at a constant voltage of 4.2 V until a current value reached 0.02 C. After an interval for an hour, the test cell was discharged at a constant current of 0.2 C until the battery voltage reached 2.5 V. Further, under a temperature environment at 25°C, the test cell was charged at a constant current of 0.2 C until a battery voltage reached 4.3 V, charged at a constant voltage of 4.3 V until a current value reached 0.02 C, then discharged at a constant current at 0.5 C until the battery voltage reached 2.5 V, and after an interval for 10 minutes, the test cell was discharged at 0.02 C until the battery voltage reached 2.5 V. Output characteristics were calculated from a discharge capacity at 0.5 C and a discharge capacity at 0.02 C with the following formula. Output characteristics (%) = Discharge capacity at 0.5 C / (Discharge capacity at 0.5 C + Discharge capacity at 0.02 C) × 100

### <Example 2>

A test cell was produced and evaluated in the same manner as in Example 1 except that, in the adding step in producing the positive electrode active material, the amount of the lithium methanesulfonate added relative to the total mass of the lithium-containing composite oxide was 0.3 mass%.

### <Example 3>

A test cell was produced and evaluated in the same manner as in Example 1 except that, in the adding step in producing the positive electrode active material, the amount of the lithium methanesulfonate added relative to the total mass of the lithium-containing composite oxide was 0.5 mass%.

### <Example 4>

A test cell was produced and evaluated in the same manner as in Example 1 except that, in the adding step in producing the positive electrode active material, the amount of the lithium methanesulfonate added relative to the total mass of the lithium-containing composite oxide was 0.8 mass%.

### <Example 5>

A test cell was produced and evaluated in the same manner as in Example 1 except that, in the adding step in producing the positive electrode active material, the amount of the lithium methanesulfonate added relative to the total mass of the lithium-containing composite oxide was 1 mass%.

### <Example 6>

A test cell was produced and evaluated in the same manner as in Example 1 except that, in the adding step in producing the positive electrode active material, powdery sodium methanesulfonate was added instead of lithium methanesulfonate, and the amount of the sodium methanesulfonate added relative to the total mass of the lithium-containing composite oxide was 0.5 mass%.

### <Example 7>

A test cell was produced and evaluated in the same manner as in Example 1 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%. A concentration of the methanesulfonic acid solution added was 10 mass%, and the methanesulfonic acid solution was added so that an amount of methanesulfonic acid added was the above. By Fourier transformation infrared spectrometry (FT-IR), the presence of lithium sulfonate on the surface of the positive electrode active material was confirmed. The concentrations of the methanesulfonic acid solutions used hereinafter were all 10 mass%.

### <Comparative Example 1>

A test cell was produced and evaluated in the same manner as in Example 1 except that, in the production of the positive electrode active material, the adding step was not performed.

### <Comparative Example 2>

A test cell was produced and evaluated in the same manner as in Example 1 except that, in the adding step in producing the positive electrode active material, powdery lithium succinate was added instead of lithium methanesulfonate, and the amount of the lithium succinate added relative to the total mass of the lithium-containing composite oxide was 0.5 mass%.

### <Comparative Example 3>

A test cell was produced and evaluated in the same manner as in Example 1 except that, in the adding step in producing the positive electrode active material, powdery lithium oxalate was added instead of lithium methanesulfonate, and the amount of the lithium oxalate added relative to the total mass of the lithium-containing composite oxide was 0.5 mass%.

### <Comparative Example 4>

A test cell was produced and evaluated in the same manner as in Example 1 except that: in the adding step in producing the positive electrode active material, the amount of the lithium methanesulfonate added relative to the total mass of the lithium-containing composite oxide was 0.5 mass%; and in the production of the test cell, the number of the aluminum leads was changed to one.

### <Comparative Example 5>

A test cell was produced and evaluated in the same manner as in Example 1 except that: in the adding step in producing the positive electrode active material, the amount of the lithium methanesulfonate added relative to the total mass of the lithium-containing composite oxide was 0.5 mass%; and in the production of the positive electrode, the positive electrode slurry was applied so that the basis weight was 190 g/m².

### <Comparative Example 6>

A test cell was produced and evaluated in the same manner as in Example 1 except that: in the adding step in producing the positive electrode active material, the amount of the lithium methanesulfonate added relative to the total mass of the lithium-containing composite oxide was 0.5 mass%; in the production of the positive electrode, cutting was performed to a predetermined electrode size to be housed in an exterior with φ20 mm in outer diameter to obtain a positive electrode; and in the production of the test cell, the number of the aluminum leads was changed to one, and the electrode assembly was housed in the exterior with φ20 mm in outer diameter.

### <Comparative Example 7>

A test cell was produced and evaluated in the same manner as in Example 1 except that: in the adding step in producing the positive electrode active material, the amount of the lithium methanesulfonate added relative to the total mass of the lithium-containing composite oxide was 0.5 mass%; in the production of the positive electrode, cutting was performed to a predetermined electrode size to be housed in an exterior with φ20 mm in outer diameter to obtain the positive electrode; and in the production of the test cell, the electrode assembly was housed in the exterior with φ20 mm in outer diameter.

Table 1 shows the battery capacity per unit volume and the output characteristics of the test cells of Examples 1 to 7 and Comparative Examples 1 to 7. Table 1 also shows the composition (proportion of each of the metal elements relative to the total number of moles of the metal elements excluding Li) and the average particle diameter (D50) of the lithium-containing composite oxide, the type, adding method, and addition amount of the sulfonate compound added, the outer diameter of the battery, and the basis weight of the positive electrode mixture layer, and the current collecting aspect and the number of the aluminum leads of the positive electrode. The battery capacity per unit volume shown in Table 1 is a relative evaluation based on Example 1. A case where the battery capacity is larger than that of Example 1 by greater than or equal to 5% is shown as "Excellent", a case where the battery capacity is comparable to that of Example 1 (less than ±5% relative to that of Example 1) is shown as "Good", a case where the battery capacity is smaller than that of Example 1 by greater than or equal to 5% and less than 10% is shown as "Fair", a case where the battery capacity is smaller than that of Example 1 by greater than or equal to 10% is shown as "Poor", and a case where the battery capacity is smaller than that of Example 1 by greater than or equal to 20% is shown as "Bad". The output characteristics of Examples and Comparative Examples shown in Table 1 are shown relative to the output characteristics of the test cell of Comparative Example 1 being 100.

**[Table 1]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 1 | 90 | 5 | 5 | 0 | 11 | Li methanesulfonate | Powder addition | 0.1 | 50 | 250 | One line | 6 | Excellent | 101.3 |
| Example 2 | 90 | 5 | 5 | 0 | 11 | Li methanesulfonate | Powder addition | 0.3 | 50 | 250 | One line | 6 | Excellent | 102.2 |
| Example 3 | 90 | 5 | 5 | 0 | 11 | Li methanesulfonate | Powder addition | 0.5 | 50 | 250 | One line | 6 | Excellent | 103.0 |
| Example 4 | 90 | 5 | 5 | 0 | 11 | Li methanesulfonate | Powder addition | 0.8 | 50 | 250 | One line | 6 | Excellent | 101.9 |
| Example 5 | 90 | 5 | 5 | 0 | 11 | Li methanesulfonate | Powder addition | 1.0 | 50 | 250 | One line | 6 | Excellent | 101.0 |
| Example 6 | 90 | 5 | 5 | 0 | 11 | Na methanesulfonate | Powder addition | 0.5 | 50 | 250 | One line | 6 | Excellent | 101.2 |
| Example 7 | 90 | 5 | 5 | 0 | 11 | Methanesulfonic acid | Solution addition | 0.48 | 50 | 250 | One line | 6 | Excellent | 102.3 |
| Comparative Example 1 | 90 | 5 | 5 | 0 | 11 | None | - | - | 50 | 250 | One line | 6 | Good | 100 |
| Comparative Example 2 | 90 | 5 | 5 | 0 | 11 | Li succinate | Powder addition | 0.5 | 50 | 250 | One line | 6 | Good | 99.7 |
| Comparative Example 3 | 90 | 5 | 5 | 0 | 11 | Li oxalate | Powder addition | 0.5 | 50 | 250 | One line | 6 | Good | 99.6 |
| Comparative Example 4 | 90 | 5 | 5 | 0 | 11 | Li methanesulfonate | Powder addition | 0.5 | 50 | 250 | - | 1 | Fair | 99.0 |
| Comparative Example 5 | 90 | 5 | 5 | 0 | 11 | Li methanesulfonate | Powder addition | 0.5 | 50 | 190 | One line | 6 | Poor | 103.3 |
| Comparative Example 6 | 90 | 5 | 5 | 0 | 11 | Li methanesulfonate | Powder addition | 0.5 | 20 | 250 | - | 1 | Bad | 103.5 |
| Comparative Example 7 | 90 | 5 | 5 | 0 | 11 | Li methanesulfonate | Powder addition | 0.5 | 20 | 250 | One line | 6 | Bad | 103.9 |

### <Example 8>

A test cell was produced and evaluated in the same manner as in Example 1 except that: in the production of the positive electrode active material, the composition of the lithium-containing composite oxide was LiNi_{0.80}Al_{0.055}Mn_{0.145}O₂, and the amount of the lithium methanesulfonate added relative to the total mass of the lithium-containing composite oxide was 0.5 mass%; in the production of the positive electrode, the positive electrode slurry was applied so that the basis weight was 325 g/m², and cutting was performed to a predetermined electrode size to be housed in an exterior with φ40 mm in outer diameter to obtain the positive electrode; and in the production of the test cell, the three aluminum leads were disposed at the substantially same angles as illustrated in FIG. 3(b), and the electrode assembly was housed in the exterior with φ40 mm in outer diameter.

### <Example 9>

A test cell was produced and evaluated in the same manner as in Example 8 except that, in the adding step in producing the positive electrode active material, powdery sodium methanesulfonate was added instead of lithium methanesulfonate.

### <Example 10>

A test cell was produced and evaluated in the same manner as in Example 8 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%.

### <Comparative Example 8>

A test cell was produced and evaluated in the same manner as in Example 8 except that, in the production of the positive electrode active material, the adding step was not performed.

### <Comparative Example 9>

A test cell was produced and evaluated in the same manner as in Example 8 except that, in the adding step in producing the positive electrode active material, powdery lithium succinate was added instead of lithium methanesulfonate.

### <Comparative Example 10>

A test cell was produced and evaluated in the same manner as in Example 8 except that, in the adding step in producing the positive electrode active material, powdery lithium oxalate was added instead of lithium methanesulfonate.

Table 2 shows the battery capacity per unit volume and the output characteristics of the test cells of Examples 8 to 10 and Comparative Examples 9 and 10. Table 2 also shows the conditions similarly to Table 1. The battery capacity per unit volume and the output characteristics shown in Table 2 are results evaluated similarly to Table 1 based on Comparative Example 8.

**[Table 2]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 8 | 80 | 0 | 5.5 | 14.5 | 11 | Li methanesulfonate | Powder addition | 0.5 | 40 | 325 | Equival ent | 3 | Excellent | 101.8 |
| Example 9 | 80 | 0 | 5.5 | 14.5 | 11 | Na methanesulfonate | Powder addition | 0.5 | 40 | 325 | Equival ent | 3 | Excellent | 101.0 |
| Example 10 | 80 | 0 | 5.5 | 14.5 | 11 | Methanesulfonic acid | Solution addition | 0.48 | 40 | 325 | Equival ent | 3 | Excellent | 101.5 |
| Comparative Example 8 | 80 | 0 | 5.5 | 14.5 | 11 | None | - | - | 40 | 325 | Equival ent | 3 | Good | 100 |
| Comparative Example 9 | 80 | 0 | 5.5 | 14.5 | 11 | Li succinate | Powder addition | 0.5 | 40 | 325 | Equival ent | 3 | Good | 99.5 |
| Comparative Example 10 | 80 | 0 | 5.5 | 14.5 | 11 | Li oxalate | Powder addition | 0.5 | 40 | 325 | Equival ent | 3 | Good | 99.3 |

### <Example 11>

A test cell was produced and evaluated in the same manner as in Example 1 except that: in the production of the positive electrode active material, the composition of the lithium-containing composite oxide was LiNi_{0.80}Co_{0.045}Al_{0.055}Mn_{0.10}O₂, and the amount of the lithium methanesulfonate added relative to the total mass of the lithium-containing composite oxide was 0.5 mass%; in the production of the positive electrode, the positive electrode slurry was applied so that the basis weight was 275 g/m², and cutting was performed to a predetermined electrode size to be housed in an exterior with φ40 mm in outer diameter to obtain the positive electrode; and in the production of the test cell, the three aluminum leads were disposed at the substantially same angles as illustrated in FIG. 3(b), and the electrode assembly was housed in the exterior with φ40 mm in outer diameter.

### <Example 12>

A test cell was produced and evaluated in the same manner as in Example 11 except that, in the adding step in producing the positive electrode active material, powdery sodium methanesulfonate was added instead of the lithium methanesulfonate.

### <Example 13>

A test cell was produced and evaluated in the same manner as in Example 11 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%.

### <Comparative Example 11>

A test cell was produced and evaluated in the same manner as in Example 11 except that, in the production of the positive electrode active material, the adding step was not performed.

### <Comparative Example 12>

A test cell was produced and evaluated in the same manner as in Example 11 except that, in the adding step in producing the positive electrode active material, powdery lithium succinate was added instead of lithium methanesulfonate.

### <Comparative Example 13>

A test cell was produced and evaluated in the same manner as in Example 11 except that, in the adding step in producing the positive electrode active material, powdery lithium oxalate was added instead of lithium methanesulfonate.

Table 3 shows the battery capacity per unit volume and the output characteristics of the test cells of Examples 11 to 13 and Comparative Examples 12 and 13. Table 3 also shows the conditions similarly to Table 1. The battery capacity per unit volume and the output characteristics shown in Table 3 are results evaluated similarly to Table 1 based on Comparative Example 11.

**[Table 3]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 11 | 80 | 4.5 | 5.5 | 10 | 11 | Li methanesulfonate | Powder addition | 0.5 | 40 | 275 | Equival ent | 3 | Excellent | 100.9 |
| Example 12 | 80 | 4.5 | 5.5 | 10 | 11 | Na methanesulfonate | Powder addition | 0.5 | 40 | 275 | Equival ent | 3 | Excellent | 100.3 |
| Example 13 | 80 | 4.5 | 5.5 | 10 | 11 | Methanesulfonic acid | Solution addition | 0.48 | 40 | 275 | Equival ent | 3 | Excellent | 100.5 |
| Comparative Example 11 | 80 | 4.5 | 5.5 | 10 | 11 | None | - | - | 40 | 275 | Equival ent | 3 | Good | 100 |
| Comparative Example 12 | 80 | 4.5 | 5.5 | 10 | 11 | Li succinate | Powder addition | 0.5 | 40 | 275 | Equival ent | 3 | Good | 99.6 |
| Comparative Example 13 | 80 | 4.5 | 5.5 | 10 | 11 | Li oxalate | Powder addition | 0.5 | 40 | 275 | Equival ent | 3 | Good | 99.5 |

### <Example 14>

A test cell was produced and evaluated in the same manner as in Example 1 except that: in the production of the positive electrode active material, the composition of the lithium-containing composite oxide was LiNi_{0.80}Co_{0.10}Mn_{0.10}O₂, and the amount of the lithium methanesulfonate added relative to the total mass of the lithium-containing composite oxide was 0.5 mass%; in the production of the positive electrode, cutting was performed to a predetermined electrode size to be housed in an exterior with φ45 mm in outer diameter to obtain the positive electrode; and in the production of the test cell, as illustrated in FIG. 4, the positive electrode and the sealing assembly were connected via the positive electrode current-collecting member, the negative electrode and the exterior were connected via the negative electrode current-collecting member, and the electrode assembly was housed in the exterior with φ45 mm in outer diameter.

### <Example 15>

A test cell was produced and evaluated in the same manner as in Example 14 except that, in the adding step in producing the positive electrode active material, powdery sodium methanesulfonate was added instead of lithium methanesulfonate.

### <Example 16>

A test cell was produced and evaluated in the same manner as in Example 14 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%.

### <Comparative Example 14>

A test cell was produced and evaluated in the same manner as in Example 14 except that, in the production of the positive electrode active material, the adding step was not performed.

### <Comparative Example 15>

A test cell was produced and evaluated in the same manner as in Example 14 except that, in the adding step in producing the positive electrode active material, powdery lithium succinate was added instead of lithium methanesulfonate.

### <Comparative Example 16>

A test cell was produced and evaluated in the same manner as in Example 14 except that, in the adding step in producing the positive electrode active material, powdery lithium oxalate was added instead of lithium methanesulfonate.

### <Comparative Example 17>

A test cell was produced and evaluated in the same manner as in Example 14 except that, in the production of the positive electrode, the positive electrode slurry was applied so that the basis weight was 190 g/m².

### <Comparative Example 18>

A test cell was produced and evaluated in the same manner as in Example 14 except that: in the production of the positive electrode active material, the adding step was not performed; in the production of the positive electrode, cutting was performed to a predetermined electrode size to be housed in an exterior with φ20 mm in outer diameter to obtain a positive electrode; and in the production of the test cell, the electrode assembly was housed in the exterior with φ20 mm in outer diameter.

### <Comparative Example 19>

A test cell was produced and evaluated in the same manner as in Example 14 except that: in the production of the positive electrode, cutting was performed to a predetermined electrode size to be housed in an exterior with φ20 mm in outer diameter to obtain a positive electrode; and in the production of the test cell, the electrode assembly was housed in the exterior with φ20 mm in outer diameter.

Table 4 shows the battery capacity per unit volume and the output characteristics of the test cells of Examples 14 to 16 and Comparative Examples 15 and 19. Table 4 also shows the conditions similarly to Table 1. The battery capacity per unit volume and the output characteristics shown in Table 3 are results evaluated similarly to Table 1 based on Comparative Example 14.

**[Table 4]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 14 | 80 | 10 | 0 | 10 | 11 | Li methanesulfonate | Powder addition | 0.5 | 45 | 250 | Current-collecting member | - | Excellent | 100.8 |
| Example 15 | 80 | 10 | 0 | 10 | 11 | Na methanesulfonate | Powder addition | 0.5 | 45 | 250 | Current-collecting member | - | Excellent | 100.4 |
| Example 16 | 80 | 10 | 0 | 10 | 11 | Methanesulfonic acid | Solution addition | 0.48 | 45 | 250 | Current-collecting member | - | Excellent | 100.5 |
| Comparative Example 14 | 80 | 10 | 0 | 10 | 11 | None | - | - | 45 | 250 | Current-collecting member | - | Good | 100 |
| Comparative Example 15 | 80 | 10 | 0 | 10 | 11 | Li succinate | Powder addition | 0.5 | 45 | 250 | Current-collecting member | - | Good | 99.7 |
| Comparative Example 16 | 80 | 10 | 0 | 10 | 11 | Li oxalate | Powder addition | 0.5 | 45 | 250 | Current-collecting member | - | Good | 99.6 |
| Comparative Example 17 | 80 | 10 | 0 | 10 | 11 | Li methanesulfonate | Powder addition | 0.5 | 45 | 190 | Current-collecting member | - | Poor | 103.3 |
| Comparative Example 18 | 80 | 10 | 0 | 10 | 11 | None | - | - | 20 | 250 | Current-collecting member | - | Bad | 99.0 |
| Comparative Example 19 | 80 | 10 | 0 | 10 | 11 | Li methanesulfonate | Powder addition | 0.5 | 20 | 250 | Current-collecting member | - | Bad | 103.3 |

### <Example 17>

A test cell was produced and evaluated in the same manner as in Example 1 except that: in the production of the positive electrode active material, the composition of the lithium-containing composite oxide was LiNi_{0.70}Al_{0.05}Mn_{0.25}O₂, and the amount of the lithium methanesulfonate added relative to the total mass of the lithium-containing composite oxide was 0.5 mass%; in the production of the positive electrode, the positive electrode slurry was applied so that the basis weight was 325 g/m², and cutting was performed to a predetermined electrode size to be housed in an exterior with φ30 mm in outer diameter to obtain the positive electrode; and in the production of the test cell, the number of the aluminum leads was changed to three, and the electrode assembly was housed in the exterior with φ30 mm in outer diameter.

### <Example 18>

A test cell was produced and evaluated in the same manner as in Example 17 except that, in the adding step in producing the positive electrode active material, powdery sodium methanesulfonate was added instead of lithium methanesulfonate.

### <Example 19>

A test cell was produced and evaluated in the same manner as in Example 17 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%.

### <Comparative Example 20>

A test cell was produced and evaluated in the same manner as in Example 17 except that, in the production of the positive electrode active material, the adding step was not performed.

### <Comparative Example 21>

A test cell was produced and evaluated in the same manner as in Example 17 except that, in the adding step in producing the positive electrode active material, powdery lithium succinate was added instead of lithium methanesulfonate.

### <Comparative Example 22>

A test cell was produced and evaluated in the same manner as in Example 17 except that, in the adding step in producing the positive electrode active material, powdery lithium oxalate was added instead of lithium methanesulfonate.

Table 5 shows the battery capacity per unit volume and the output characteristics of the test cells of Examples 17 to 19 and Comparative Examples 21 and 22. Table 5 also shows the conditions similarly to Table 1. The battery capacity per unit volume and the output characteristics shown in Table 5 are results evaluated similarly to Table 1 based on Comparative Example 20.

**[Table 5]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 17 | 70 | 0 | 5 | 25 | 11 | Li methanesulfonate | Powder addition | 0.5 | 30 | 325 | One line | 3 | Excellent | 102.0 |
| Example 18 | 70 | 0 | 5 | 25 | 11 | Na methanesulfonate | Powder addition | 0.5 | 30 | 325 | One line | 3 | Excellent | 101.1 |
| Example 19 | 70 | 0 | 5 | 25 | 11 | Methanesulfonic acid | Solution addition | 0.48 | 30 | 325 | One line | 3 | Excellent | 101.4 |
| Comparative Example 20 | 70 | 0 | 5 | 25 | 11 | None | - | - | 30 | 325 | One line | 3 | Good | 100 |
| Comparative Example 21 | 70 | 0 | 5 | 25 | 11 | Li succinate | Powder addition | 0.5 | 30 | 325 | One line | 3 | Good | 99.4 |
| Comparative Example 22 | 70 | 0 | 5 | 25 | 11 | Li oxalate | Powder addition | 0.5 | 30 | 325 | One line | 3 | Good | 99.2 |

### <Example 20>

A test cell was produced and evaluated in the same manner as in Example 1 except that: in the production of the positive electrode active material, the composition of the lithium-containing composite oxide was LiNi_{0.80}Mn_{0.20}O₂, and the amount of the lithium methanesulfonate added relative to the total mass of the lithium-containing composite oxide was 0.5 mass%; and in the production of the positive electrode, the positive electrode slurry was applied so that the basis weight was 325 g/m².

### <Example 21>

A test cell was produced and evaluated in the same manner as in Example 20 except that, in the adding step in producing the positive electrode active material, powdery sodium methanesulfonate was added instead of lithium methanesulfonate.

### <Example 22>

A test cell was produced and evaluated in the same manner as in Example 20 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%.

### <Comparative Example 23>

A test cell was produced and evaluated in the same manner as in Example 20 except that, in the production of the positive electrode active material, the adding step was not performed.

### <Comparative Example 24>

A test cell was produced and evaluated in the same manner as in Example 20 except that, in the adding step in producing the positive electrode active material, powdery lithium succinate was added instead of lithium methanesulfonate.

### <Comparative Example 25>

A test cell was produced and evaluated in the same manner as in Example 20 except that, in the adding step in producing the positive electrode active material, powdery lithium oxalate was added instead of lithium methanesulfonate.

Table 6 shows the battery capacity per unit volume and the output characteristics of the test cells of Examples 20 to 22 and Comparative Examples 24 and 25. Table 6 also shows the conditions similarly to Table 1. The battery capacity per unit volume and the output characteristics shown in Table 6 are results evaluated similarly to Table 1 based on Comparative Example 23.

**[Table 6]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 20 | 80 | 0 | 0 | 20 | 11 | Li methanesulfonate | Powder addition | 0.5 | 50 | 325 | One line | 6 | Excellent | 101.8 |
| Example 21 | 80 | 0 | 0 | 20 | 11 | Na methanesulfonate | Powder addition | 0.5 | 50 | 325 | One line | 6 | Excellent | 100.8 |
| Example 22 | 80 | 0 | 0 | 20 | 11 | Methanesulfonic acid | Solution addition | 0.48 | 50 | 325 | One line | 6 | Excellent | 101.4 |
| Comparative Example 23 | 80 | 0 | 0 | 20 | 11 | None | - | - | 50 | 325 | One line | 6 | Good | 100 |
| Comparative Example 24 | 80 | 0 | 0 | 20 | 11 | Li succinate | Powder addition | 0.5 | 50 | 325 | One line | 6 | Good | 99.5 |
| Comparative Example 25 | 80 | 0 | 0 | 20 | 11 | Li oxalate | Powder addition | 0.5 | 50 | 325 | One line | 6 | Good | 99.2 |

### <Example 23>

A test cell was produced and evaluated in the same manner as in Example 1 except that, in the production of the positive electrode active material, two types of particles having a composition of LiNi_{0.90}Co_{0.05}Mn_{0.05}O₂ and a median diameter (D50) on a volumetric basis of 3 µm or 15 µm were synthesized, these were mixed at a mass ratio of 50:50 for use as the lithium-containing composite oxide, and the amount of the lithium methanesulfonate added relative to the total mass of the lithium-containing composite oxide was 0.5 mass%.

### <Example 24>

A test cell was produced and evaluated in the same manner as in Example 23 except that, in the adding step in producing the positive electrode active material, powdery sodium methanesulfonate was added instead of lithium methanesulfonate.

### <Example 25>

A test cell was produced and evaluated in the same manner as in Example 23 except that, in the adding step in producing the positive electrode active material, a methanesulfonic acid solution was added instead of the powdery lithium methanesulfonate, and the amount of the methanesulfonic acid added relative to the total mass of the lithium-containing composite oxide was 0.48 mass%.

### <Example 26>

A test cell was produced and evaluated in the same manner as in Example 23 except that, in the production of the positive electrode active material, two types of particles with 3 µm or 12 µm were synthesized, and these were mixed at a mass ratio of 50:50 for use as the lithium-containing composite oxide.

### <Example 27>

A test cell was produced and evaluated in the same manner as in Example 23 except that, in the production of the positive electrode active material, two types of particles with 5 µm or 15 µm were synthesized, and these were mixed at a mass ratio of 50:50 for use as the lithium-containing composite oxide.

### <Comparative Example 26>

A test cell was produced and evaluated in the same manner as in Example 23 except that, in the production of the positive electrode active material, the adding step was not performed.

### <Comparative Example 27>

A test cell was produced and evaluated in the same manner as in Example 23 except that, in the adding step in producing the positive electrode active material, powdery lithium succinate was added instead of lithium methanesulfonate.

### <Comparative Example 28>

A test cell was produced and evaluated in the same manner as in Example 23 except that, in the adding step in producing the positive electrode active material, powdery lithium oxalate was added instead of lithium methanesulfonate.

Table 6 shows the battery capacity per unit volume and the output characteristics of the test cells of Examples 23 to 27 and Comparative Examples 27 and 28. Table 7 also shows the conditions similarly to Table 1. The battery capacity per unit volume and the output characteristics shown in Table 7 are results evaluated similarly to Table 1 based on Comparative Example 26.

**[Table 7]**

| | Lithium-containing composite oxide | | | | | Additive | | | Battery outer diameter [mm] | Basis weight [g/m²] | Current collection with positive electrode | | Evaluation results | |
|---|---|---|---|---|---|---|---|---|---|---|---|---|---|---|
| | Composition [mol%] | | | | D50 [µm] | Type | Adding method | Addition amount [mass%] | | | | | | |
| | Ni | Co | Al | Mn | | | | | | | Aspect | Number of leads | Battery capacity per unit volume | Output characteristics |
| Example 23 | 90 | 5 | 0 | 5 | 3(50%) | Li methanesulfonate | Powder addition | 0.5 | 50 | 250 | One line | 6 | Excellent | 102.8 |
| | | | | | 15(50%) | | | | | | | | | |
| Example 24 | 90 | 5 | 0 | 5 | 3(50%) | Na methanesulfonate | Powder addition | 0.5 | 50 | 250 | One line | 6 | Excellent | 101.9 |
| | | | | | 15(50%) | | | | | | | | | |
| Example 25 | 90 | 5 | 0 | 5 | 3(50%) | Methanesulfonic acid | Solution addition | 0.48 | 50 | 250 | One line | 6 | Excellent | 102.5 |
| | | | | | 15(50%) | | | | | | | | | |
| Example 26 | 90 | 5 | 0 | 5 | 3(50%) | Li methanesulfonate | Powder addition | 0.5 | 50 | 250 | One line | 6 | Excellent | 103.1 |
| | | | | | 12(50%) | | | | | | | | | |
| Example 27 | 90 | 5 | 0 | 5 | 5(50%) | Li methanesulfonate | Powder addition | 0.5 | 50 | 250 | One line | 6 | Excellent | 102.3 |
| | | | | | 15(50%) | | | | | | | | | |
| Comparative Example 26 | 90 | 5 | 0 | 5 | 3(50%) | None | - | - | 50 | 250 | One line | 6 | Good | 100 |
| | | | | | 15(50%) | | | | | | | | | |
| Comparative Example 27 | 90 | 5 | 0 | 5 | 3(50%) | Li succinate | Powder addition | 0.5 | 50 | 250 | One line | 6 | Good | 99.6 |
| | | | | | 15(50%) | | | | | | | | | |
| Comparative Example 28 | 90 | 5 | 0 | 5 | 3(50%) | Li oxalate | Powder addition | 0.5 | 50 | 250 | One line | 6 | Good | 99.3 |
| | | | | | 15(50%) | | | | | | | | | |

In all Table 1 to Table 7, Examples increase the battery capacity per unit volume and improve the output characteristics compared with Comparative Examples.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30 Positive electrode current collector, 32 Positive electrode mixture layer, 34 Positive electrode current collector exposed portion, 40 Negative electrode current collector, 42 Negative electrode mixture layer, 44 Negative electrode current collector exposed portion, 50 Positive electrode current collecting member, 52 Negative electrode current collecting member

## Claims

1. A cylindrical secondary battery, comprising:
an electrode assembly in which a band-shaped positive electrode and a band-shaped negative electrode are wound with a separator interposed therebetween;
a bottomed cylindrical exterior with greater than or equal to 25 mm in outer diameter that houses the electrode assembly and that is connected to the negative electrode; and
a sealing assembly that seals an opening of an upper end of the exterior and that is connected to the positive electrode, wherein
the positive electrode has a positive electrode current collector and a positive electrode mixture layer formed on a surface of the positive electrode current collector,
the positive electrode mixture layer contains a positive electrode active material,
the positive electrode active material includes a lithium-containing composite oxide having a layered rock-salt structure and a sulfonate compound present on a surface of the lithium-containing composite oxide,
the sulfonate compound is represented by the following general formula (I),
a basis weight of the positive electrode mixture layer is greater than or equal to 250 g/m², and
in the electrode assembly, greater than or equal to three positive electrode leads are drawn out, 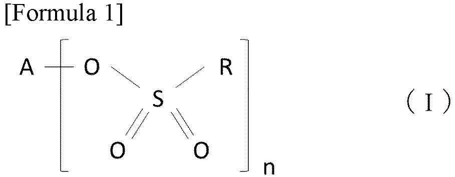
wherein A represents a I-group element or a II-group element, R represents a hydrocarbon group, and "n" represents 1 or 2.

2. The cylindrical secondary battery according to claim 1, wherein the positive electrode leads are arranged on an upper surface of the electrode assembly in substantially one line in a radial direction.

3. The cylindrical secondary battery according to claim 1, wherein the positive electrode leads are arranged on an upper surface of the electrode assembly with substantially same angles.

4. The cylindrical secondary battery according to any one of claims 1 to 3, wherein
the positive electrode has a plurality of positive electrode current collector exposed portions where the positive electrode current collector is exposed on an upper end along a longitudinal direction,
the positive electrode mixture layer is present between the positive electrode current collector exposed portions, and
one of the positive electrode leads is connected to each of the positive electrode current collector exposed portions.

5. A cylindrical secondary battery, comprising:
an electrode assembly in which a band-shaped positive electrode and a band-shaped negative electrode are wound with a separator interposed therebetween;
a bottomed cylindrical exterior with greater than or equal to 25 mm in outer diameter that houses the electrode assembly and that is connected to the negative electrode; and
a sealing assembly that seals an opening of an upper end of the exterior and that is connected to the positive electrode, wherein
the positive electrode has a positive electrode current collector and a positive electrode mixture layer formed on a surface of the positive electrode current collector,
the positive electrode mixture layer contains a positive electrode active material,
the positive electrode active material includes a lithium-containing composite oxide having a layered rock-salt structure and a sulfonate compound present on a surface of the lithium-containing composite oxide,
the sulfonate compound is represented by the following general formula (I),
a basis weight of the positive electrode mixture layer is greater than or equal to 250 g/m², and
in the electrode assembly, the positive electrode protruding above the negative electrode and the separator is connected to a positive electrode current-collecting member, and the positive electrode current-collecting member and the sealing assembly are connected with a positive electrode lead, 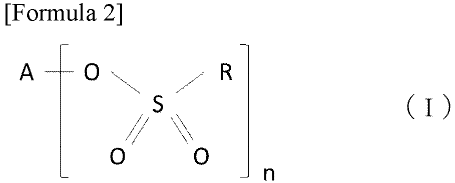
wherein A represents a I-group element or a II-group element, R represents a hydrocarbon group, and "n" represents 1 or 2.

6. The cylindrical secondary battery according to any one of claims 1 to 5, wherein the A represents the I-group element.

7. The cylindrical secondary battery according to any one of claims 1 to 5, wherein the A represents Li.

8. The cylindrical secondary battery according to any one of claims 1 to 7, wherein the R represents an alkyl group.

9. The cylindrical secondary battery according to any one of claims 1 to 7, wherein the R represents a methyl group.

10. The cylindrical secondary battery according to any one of claims 1 to 9, wherein the positive electrode active material is a mixture of: particles having a median diameter on a volumetric basis of greater than or equal to 10 µm; and particles having a median diameter on a volumetric basis of less than or equal to 6 µm.

11. The cylindrical secondary battery according to any one of claims 1 to 10, wherein an amount of the sulfonate compound present on the surface of the lithium-containing composite oxide is greater than or equal to 0.1 mass% and less than or equal to 1 mass% relative to a mass of the lithium-containing composite oxide.

12. The cylindrical secondary battery according to any one of claims 1 to 11, wherein an infrared absorption spectrum has an absorption peak at at least greater than or equal to one position near 1238 cm⁻¹, 1175 cm⁻¹, 1065 cm⁻¹, and 785 cm⁻¹.
